# EUROPÄISCHE PATENTSCHRIFT

(11) **EP 0 386 745 B1**
(45) Veröffentlichungstag und Bekanntmachung des Hinweises auf die Patenterteilung: **30.06.1993**
(21) Anmeldenummer: 90104375.2
(22) Anmeldetag: 07.03.1990
(51) Int. Cl.: B29C 67/20

(54) **Verfahren und Vorrichtung zur Herstellung von Leichtbauplatten**
Method and device for manufacturing light building panels
Méthode et dispositif de fabrication de panneaux légers pour bâtiments

(30) Priorität: 08.03.1989 DE 3907521
(43) Veröffentlichungstag der Anmeldung: 12.09.1990
(73) Patentinhaber: StoVerotec GmbH, D-89415 Lauingen (DE)
(72) Erfinder: Kubbutat, Albert, D-8886 Wittislingen (DE)
(74) Vertreter: Patentanwälte Leinweber & Zimmermann

(56) Entgegenhaltungen:
- DE-A- 3 217 593
- DE-B- 1 103 554
- GB-A- 152 173
- GB-A- 1 377 974

## Beschreibung

Die Erfindung bezieht sich auf ein Verfahren zur Herstellung von Leichtbauplatten unter Verwendung von Kugeln aus Blähglas, Blähton, Bimsgranulat, Glimmer oder einem ähnlichen Material und einem geschäumten organischen oder anorganischen Bindemittel, wie z.B. Epoxiharz, PU-Phenolharz, das mit den Kugeln gemischt wird, aufschäumt und zwischen zwei mit Abstand voneinander angeordneten Formplatten unter Bildung einer Matrix aushärtet.

Bei einem bekannten Verfahren dieser Art (DE-OS 37 15 487), auf das sich die Oberbegriffe der unabhängigen Ansprüche 1 und 2 stützen, füllt die Blähglaskugel-Kunstharz-Mischung - abgesehen von den kleinen Lufträumen zwischen den Blähglaskugeln - den gesamten, von den ebenen Formplattenoberflächen begrenzten Raum aus. Das Gewicht derartiger Leichtbauplatten und die zu ihrer Herstellung erforderliche Materialmenge hängen im wesentlichen von der vor dem Aushärten durch Zusammendrücken der Mischung erreichten Materialverdichtung ab. Als Kerne von Sandwichelementen sind derartige Leichtbauplatten, bei denen die Deckschichten als Zugelemente wirken, sehr stabil und hoch belastbar.

Der Erfindung liegt die Aufgabe zugrunde, das Verfahren der eingangs genannten Art so weiter auszugestalten, daß Leichtbauplatten mit vergleichsweise geringerem Plattengewicht ohne Beeinträchtigung der Belastbarkeit bei Verarbeitung als Kerne von Sandwichelementen herstellbar sind.

Das Verfahren nach der Erfindung, bei dem diese Aufgabe gelöst ist, zeichnet sich im wesentlichen dadurch aus, daß in die zwischen den beiden Formplatten befindliche Mischung bei deren Verdichtung und vor deren Aushärtung eine Vielzahl von gleichmäßig verteilten, zu mindestens einer der beiden Außenseiten der Leichtbauplatten offenen Ausnehmungen ausgeformt wird.

Es hat sich gezeigt, daß nach diesem Verfahren Leichtbauplatten mit besonders geringem Gewicht gefertigt werden können, die als Kerne von Sandwichstrukturen trotz der Vielzahl der Hohlräume hoch belastbar sind.

An dieser Stelle ist zu erwähnen, daß es bereits bekannt ist (GB-A-1 377 974), für den Unterwassereinsatz geeignete Auftriebskörper zu schaffen, die höheren Drücken standzuhalten vermögen, und zwar aus zusammengesetztem Schaummaterial geringer Dichte, nämlich aus einer Vielzahl von Polystryrol-Schaumstoffwürfeln, die in regelmäßigen gegenseitigen Abständen voneinander angeordnet und von einer ausgehärteten Epoxidharzmasse mit in dieser eingelagerten kugelförmigen Hohlkörpern umgeben sind. Das so aufgebaute Epoxidharzmasse-Hohlkörper-Gitterwerk sorgt trotz des geringen spezifischen Gewichts für die erforderliche mechanische Festigkeit der ganzen Einheit, und die Polystyrol-Schaumstoffwürfel dienen in dieser als preisgünstiges, sehr leichtes Füllmaterial.

Die Erfindung richtet sich weiterhin auf eine Vorrichtung zur Durchführung des vorgenannten Verfahrens, mit dem Kennzeichen, daß zwei Formplatten vorgesehen sind, die in einer Presse unter Verdichtung der eingeführten Mischung aufeinanderzu fahrbar sind, und daß mindestens eine der beiden Formplatten auf ihrer Oberfläche mit einer Vielzahl gleichmäßig verteilter Formkörper bestückt ist, deren parallel zur Formplattenoberfläche verlaufender Querschnitt zur jeweils anderen Formplatte hin abnimmt.

Bei den zum Einsatz gelangenden Formkörpern kann es sich beispielsweise um halbkugelförmige Formkörper handeln. Eine günstigere Materialausnutzung, d.h. eine höhere Stabilität bei weniger Materialeinsatz ergibt sich, wenn die Formkörper kegelförmig ausgebildet sind.

Als besonders günstig hat es sich erwiesen, wenn beide Formplatten mit Formkörpern bestückt sind. Zweckmäßigerweise sind die Formkörper der einen Formplatte dabei relativ zu denen der anderen Formplatte versetzt angeordnet; in zusammengefahrenem Zustand der Formplatten ragen die Formkörper der einen Formplatte jeweils in die Zwischenräume zwischen den Formkörpern der anderen Formplatte.

Eine besonders geschickte Materialverteilung und - ausnutzung wird erreicht, wenn die Basen der kegelförmigen Formkörper der einen Formplatte in ihrer Projektion auf die andere Formplatte die Basen der auf dieser Formplatte befindlichen Formkörper überlappen.

Für die Montage der Formkörper hat es sich als günstig herausgestellt, wenn jeder Formkörper basisseitig ein Gewindesackloch zur Aufnahme einer die zugehörige Formplatte durchsetzenden Halteschraube aufweist.

Um eine einwandfreie Fixierung der Formkörper an der Formplatte auch dann zu gewährleisten, wenn sie einen kleinen Durchmesser besitzen und um dabei ferner eine präzise Verteilung der Formkörper auf jeder Formplatte sicherzustellen, hat es sich als günstig erwiesen, wenn an jeden kegelförmigen Formkörper ein zylindrischer Fuß mit einem Durchmesser angeformt ist, der dem Durchmesser der Kegelbasis entspricht, und wenn jeder Formplatte eine Lochplatte mit Löchern vorgeschaltet ist, deren Durchmesser dem der Kegelbasen entspricht. Dabei besitzt die Lochplatte zweckmäßigerweise eine Dicke entsprechend der Höhe der zylindrischen Füße der kegelförmigen Formkörper.

Bei einer vorteilhaften Ausführungsform der Vorrichtung nach der Erfindung umfaßt die die Formplatten aufnehmende Form eine Trägerplatte mit einem Rahmen und eine Druckplatte, und die gemeinsame Höhe der beiden Formplatten und eines Formkörpers liegt zwischen 2/3 bis 3/4 der Höhe des Rahmens. Beim Auffüllen der den Rahmen umfassenden unteren Formhälfte mit der Mischung bis zur Höhe der Spitzen der kegelförmigen Formkörper kann die andere, obere Formplatte abgesenkt werden und mit ihren kegelförmigen Formkörpern in dieses Granulat zwischen den Formkörpern der unteren Formplatte eintauchen und dieses Verdichten, und die Gefahr, daß bei diesem Schließen der Form verdrängtes Material über den Rahmen nach außen gelangen kann, ist wirksam ausgeschaltet.

Als in baulicher Hinsicht wegen ihrer Einfachheit und sehr günstig und im Hinblick auf eine einwandfreie relative Führung der Formteile besonders vorteilhaft hat sich eine Ausführung erwiesen, bei der der Rahmen als Winkelrahmen ausgebildet ist und ferner die Druckplatte mit ihrem Druckplattenrand den Winkelrahmen übergreift. Der Druckplattenrand trägt dazu bei, die beim Preßvorgang auftretenden großen Kräfte, die bestrebt sind, den Winkelrahmen nach außen zu verformen, aufzunehmen.

Weitere Einzelheiten, Vorteile und Merkmale der Erfindung ergeben sich aus der folgenden Beschreibung und der Zeichnung, auf die bezüglich aller nicht im Text beschriebenen Einzelheiten ausdrücklich verwiesen wird. Es zeigen
- Fig. 1: eine Draufsicht auf den einen Randbereich einer mit kegelförmigen Formkörpern bestücken Formplatte,
- Fig. 2: einen Querschnitt durch den Randbereich einer die Formplatte nach Fig. 1 enthaltenden Form,
- Fig. 3: einen Querschnitt durch die Druckplatten einer Form gemäß einer abgewandelten Ausführung zur Herstellung von Leichtbauplatten geringerer Dicke und
- Fig. 4 a bis 4c: drei unterschiedlich groß bemessene kegelförmige Formkörper für die Form gemäß Fig. 3.

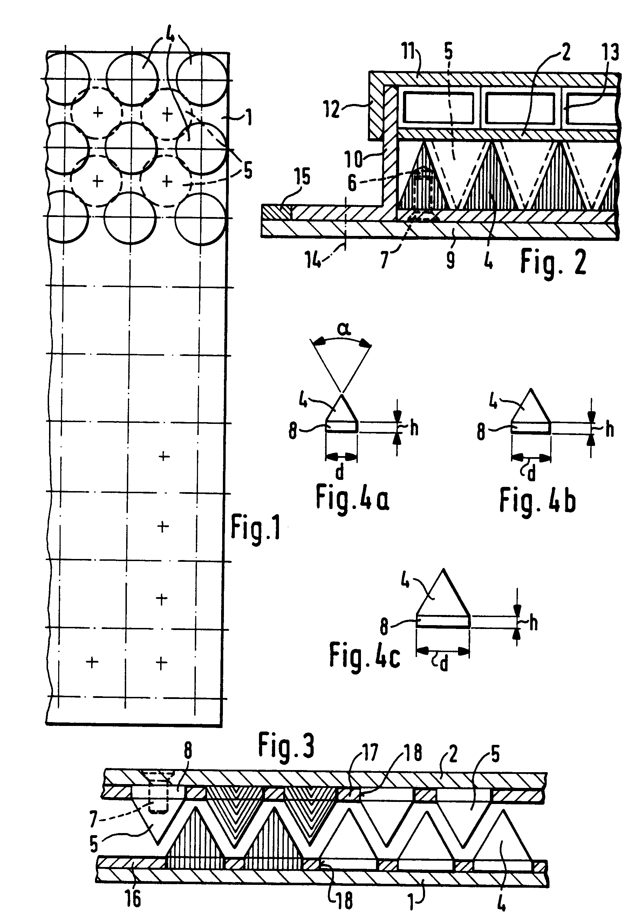

Wie aus der Zeichnung ersichtlich, umfaßt die erfindungsgemäße Vorrichtung zur Herstellung von Leichtbauplatten zwei Formplatten 1, 2, die in einer nicht näher veranschaulichten Presse unter Verdichtung der zwischen ihnen befindlichen Blähglaskugel-Kunstharz-Mischung 3 aufeinanderzu fahrbar sind. Jede der beiden Formplatten 1, 2 ist auf ihrer Oberfläche mit einer Vielzahl gleichmäßig verteilter Formkörper 4, 5 bestückt, die kegelförmig ausgebildet sind, so daß ihr parallel zur Formplattenoberfläche verlaufender Querschnitt zur jeweils anderen Formplatte hin abnimmt. Die Formkörper 4 der einen Formplatte 1 sind relativ zu den Formkörpern 5 der anderen Platte 2 versetzt angeordnet. Die Fig. 1 und 2 zeigen gemeinsam besonders deutlich, daß im zusammengefahrenen Zustand der Formplatten 1, 2 die Formkörper 5 der einen Platte 2 jeweils in die Zwischenräume zwischen den Formkörpern 4 der anderen Platte 1 ragen. Die Schnittpunkte der Achsen der Formkörper 4 mit der einen Formplatte 1 bilden die Eckpunkte von Quadraten, und die Schnittpunkte der Achsen der analog quadratisch angeordneten Formkörper 5 der Formplatte 2 mit der Formplatte 1 liegen jeweils genau in der Mitte dieser Quadrate, d.h. decken sich mit dem Schnittpunkt der Schnittlinien der Diagonalen dieser Quadrate. Außerdem sind die Formkörper 4 bzw. 5 zweckmäßigerweise derart bemessen und in Bezug zueinander angeordnet, daß die Basen der kegelförmigen Formkörper 4 bzw. 5 der einen Formplatte 1 bzw. 2 in ihrer Projektion auf die andere Formplatte 2 bzw. 1 die Basen der auf dieser Formplatte befindlichen Formkörper 5 bzw. 4 überlappen, vgl. Fig. 1. Zur Festlegung der Formkörper 4, 5 auf der jeweils zugehörigen Formplatte 1 bzw. 2 ist jeder Formkörper basisseitig mit einem Gewindesackloch 6 versehen, das der Aufnahme einer die zugehörige Formplatte durchsetzenden Halteschraube 7 dient. Bei der Ausführung nach Fig. 2 sind die kegelförmigen Formkörper so groß bemessen, daß sie mit ihren Basen unmittelbar auf der Formplatte aufliegend mit einer M6-Schraube fixiert werden können. Die Formkörper besitzen nämlich Basen mit einem Durchmeser von etwa 20 mm sowie eine Höhe von etwa 25 mm, so daß das Gewindesackloch 6 ausreichend tief gebohrt werden kann.

Bei der Ausführung nach Fig. 3 gelangen kegelförmige Formkörper zum Einsatz, deren Basen einen geringeren Durchmesser von 8 mm (Fig. 4a), 10 mm (Fig. 4b) und 15 mm (Fig. 4c) besitzen. Außerdem schließen die Mantellinien der kegelförmigen Formkörper einen Winkel von 60° miteinander ein. Hier umfassen die kegelförmigen Formkörper einen zylindrischen Fuß 8 mit einem Durchmesser, der dem Durchmesser der Kegelbasis entspricht. Auf diese Weise erhalten die Formkörper eine ausreichende Höhe, um sie mit Gewindesacklöchern zur Aufnahme von Gewindeschrauben M 4 (Fig. 4a und b) bzw. M5 (Fig. 4c) versehen zu können. Die Festlegung des kegelförmigen Formkörpers mit Fuß 8 gemäß Fig. 4c an der zugehörigen Formplatte 2 mit Hilfe einer M5-Schraube 7 ist in Fig. 3 angedeutet.

Bei der ersten Ausführungsform nach Fig. 1 bzw. 2 umfaßt die die Formplatte aufnehmende Form eine Trägerplatte 9 mit einem Winkelrahmen 10 und einer Druckplatte 11, die den Winkelrahmen 10 mit einem abgewinkelten Druckplattenrand 12 übergreift. Wie ersichtlich, ist zwischen der oberen Formplatte 2 und der Druckplatte 11 ein den Höhenausgleich dienendes Rohrpaket 13 eingeschaltet. Auf diese Weise ist sichergestellt, daß die gemeinsame Höhe der beiden Formplatten 1 und 2, deren Dicke bei etwa 5 mm liegt, und eines Formkörpers 4 bzw. 5 von etwa 25 mm, zusammen also etwa 35 mm zwischen 2/3 bis 3/4 der Höhe des Winkelrahmens von 50 mm liegt.

Beim Zusammenfahren der Formplatten 1 und 2 nach vorherigem Einfüllen der Blähglasgranulat-Kunstharz-Mischung bis etwa zur Höhe der Spitzen der kegelförmigen Formkörper 4 kann kein Granulat über den Rand des Winkelrahmens 10 nach außen gelangen. Das Material wird vielmehr nach Maßgabe der Annäherung der Formplatten 1 und 2 aneinander stark verdichtet. Die dabei auftretenden, parallel zur Ebene der Formplatten 1, 2 wirkenden Kräfte werden durch den Winkelrahmen 10 sowie den Druckplattenrand 12 aufgenommen, der den Winkelrahmen 10 übergreift. Der Winkelrahmen 10, der bei 14 mit der Trägerplatte 9 fest verschraubt ist, ist zusätzlich durch einen mit der Trägerplatte 9 fest verbundenen Stützsteg 15 gegen Verlagerung in der Trägerplattenebene gesichert.

Nach Beendigung des Formvorgangs läßt sich von den beiden Formplatten 1, 2 eine Leichtbauplatte lösen, die eine Vielzahl von gleichmäßig verteilten, zur Plattenaußenseite offenen Ausnehmungen aufweist, sich aber dennoch durch ihr besonders geringes Gewicht und ihre hohe Belastbarkeit auszeichnet.

Bei der Ausführungsform nach Fig. 3, bei der die kegelförmigen Formkörper 4 bzw. 5 gemäß Fig. 4 zum Einsatz gelangen, ist jeder Formplatte 1 bzw. 2 eine Lochplatte 16 bzw. 17 mit Löchern 18 vorgeschaltet, deren Durchmesser dem der zylindrischen Füße 8 und damit der Kegelbasen entspricht. Die Dicke der Lochplatten 16 bzw. 17 entspricht der Höhe der zylindrischen Füße 8 der kegelförmigen Formkörper 4 bzw. 5. Die den Formplatten 1 und 2 jeweils vorgeschalteten Lochplatten 16 bzw. 17 bestimmen die Dicke der mit der Form gemäß Fig. 4 herstellbaren Leichtbauplatten. Sie dienen überdies zusammen mit den Halteschrauben 7 der exakten Ausrichtung und Festlegung in Bezug zueinander und in Bezug auf die sie tragenden Formplatten 1 bzw. 2.

## Patentansprüche

1. Verfahren zur Herstellung von Leichtbauplatten unter Verwendung von Kugeln aus Blähglas, Blähton, Bimsgranulat, Glimmer oder einem ähnlichen Material und von einem geschäumten organischen oder anorganischen Bindemittel, wie z.B. Epoxiharz, PU-Phenolharz, das mit den Kugeln gemischt wird, aufschäumt und zwischen zwei mit Abstand voneinander angeordneten Formplatten (1, 2) unter Bildung einer Matrix aushärtet, dadurch gekennzeichnet, daß in die zwischen den beiden Formplatten (1, 2) befindliche Mischung bei deren Verdichtung und Aushärtung eine Vielzahl von gleichmäßig verteilten, zu mindestens einer der beiden Außenseiten der Leichtbauplatten offenen Ausnehmungen ausgeformt wird.

2. Vorrichtung zur Durchführung des Verfahrens nach Anspruch 1, in der zwei Formplatten (1, 2) vorgesehen sind, die in einer Presse unter Verdichtung der eingeführten Mischung aufeinanderzu fahrbar sind, dadurch gekennzeichnet, daß mindestens eine der beiden Formplatten (1, 2) auf ihrer Oberfläche mit einer Vielzahl gleichmäßig verteilter Formkörper (4, 5) bestückt ist, deren parallel zur Formplattenoberfläche verlaufender Querschnitt zur jeweils anderen Formplatte hin abnimmt.

3. Vorrichtung nach Anspruch 2, dadurch gekennzeichnet, daß beide Formplatten (1, 2) mit Formkörpern (4, 5) bestückt sind.

4. Vorrichtung nach Anspruch 2 oder 3, dadurch gekennzeichnet, daß die Formkörper (4, 5) kegelförmig ausgebildet sind.

5. Vorrichtung nach Anspruch 3, dadurch gekennzeichnet, daß die Formkörper (4) der einen Formplatte (1) relativ zu denen (5) der anderen Formplatte (2) versetzt angeordnet sind und daß in zusammengefahrenem Zustand der Formplatten (1, 2) die Formkörper (4) der einen Platte (1) jeweils in die Zwischenräume zwischen den Formkörpern (5) der anderen Platte (2) ragen.

6. Vorrichtung nach den Ansprüchen 3 bis 5, dadurch gekennzeichnet, daß die Basen der kegelförmigen Formkörper (4 bzw. 5) der einen Formplatte (1 bzw. 2) in ihrer Projektion auf die andere Formplatte (2 bzw. 1) die Basen der auf dieser Formplatte (2 bzw. 1) befindlichen Formkörper (5, bzw. 4) überlappen.

7. Vorrichtung nach einem der Ansprüche 2 bis 6, dadurch gekennzeichnet, daß jeder Formkörper (4, 5) basisseitig ein Gewindesackloch (6) zur Aufnahme einer die zugehörigen Formplatte (1, 2) durchsetzenden Halteschraube (7) aufweist.

8. Vorrichtung nach einem der Ansprüche 2 bis 7, dadurch gekennzeichnet, daß an jeden kegelförmigen Formkörper (4, 5) ein zylindrischer Fuß (8) mit einem Durchmesser angeformt ist, der dem Durchmesser der Kegelbasis entspricht, und daß jeder formplatte (1, 2) eine Lochplatte (16, 17) mit Löchern (18) vorgeschaltet ist, deren Durchmesser dem der Kegelbasen entspricht.

9. Vorrichtung nach Anspruch 8, dadurch gekennzeichnet, daß die Lochplatte (16, 17) eine Dicke entsprechend der Höhe der zylindrischen Füße (8) der kegelförmigen Formkörper (4, 5) besitzt.

10. Vorrichtung nach einem der Ansprüche 2 bis 9, dadurch gekennzeichnet, daß die die Formplatten (1, 2) aufnehmende Form eine Trägerplatte (9) mit einem Rahmen (10) und eine Druckplatte (11) umfaßt, und daß die gemeinsame Höhe der beiden Formplatten (1, 2) und eines Formkörpers (4 bzw. 5) zwischen 2/3 bis 3/4 der Höhe des Rahmens (10) liegt.

11. Vorrichtung nach Anspruch 10, dadurch gekennzeichnet, daß der Rahmen als Winkelrahmen (10) ausgebildet ist und daß die Druckplatte (11) mit ihrem Druckplattenrand (12) den Winkelrahmen (10) umfaßt, und daß die gemeinsame Höhe der beiden Formplatten (1, 2) und eines Formkörpers (4 bzw. 5) zwischen 2/3 bis 3/4 der Höhe des Rahmens (10) liegt.

## Claims

1. Method for manufacturing light building panels, with the use of balls made from expanded glass, expanded clay, pumice granulate, mica, or a similar material, and of a foamed organic or inorganic binding agent such as e.g. epoxy resin, PU phenol resin, which is mixed with the balls, foamed, and cured between two spaced-apart moulding plates (1, 2), forming a matrix, characterised in that a plurality of uniformly distributed recesses open towards at least one of the two outer sides of the light building panels are formed in the mixture situated between the two moulding plates (1, 2) at the compacting and curing of the said mixture.

2. Device for carrying out the method according to claim 1, wherein two moulding plates (1, 2) are provided which can be made to travel towards one another, in a press, compacting the introduced mixture, characterised in that at least one of the two moulding plates (1, 2) is equipped at its surface with a plurality of uniformly distributed moulding elements (4, 5) whose cross-section taken parallel to the moulding plate surface decreases towards the respective other moulding plate.

3. Device according to claim 2, characterised in that moulding elements(4, 5) are arranged on both the moulding plates (1, 2).

4. Device according to claim 2 or 3, characterised in that the moulding elements (4, 5) are made conical in shape.

5. Device according to claim 3, characterised in that the moulding elements (4) of one moulding plate (1) are arranged offset relatively to those (5) of the other moulding plate (2), and that in the moved-together state of the moulding plates (1, 2) the moulding elements (4) of one plate (1) project in each case into the interstices between the moulding elements (5) of the other plate (2).

6. Device according to claims 3 to 5, characterised in that the bases of the conical moulding elements (4, 5) of one moulding plate (1, 2) when projected on to the other moulding plate (2, 1) overlap the bases of the moulding elements (5, 4) situated on this moulding plate (2, 1).

7. Device according to one of claims 2 to 6, characterised in that each moulding element (4, 5) has at its base end a screwthreaded blind hole (6) for receiving a holding screw (7) extending through the associated moulding plate (1, 2).

8. Device according to one of claims 2 to 7, characterised in that there is formed on each conical moulding element (4, 5) a cylindrical base portion (8) having a diameter which corresponds to the diameter of the cone base, and that in front of each moulding plate (1, 2) a perforated plate (16, 17) is arranged which has holes (18) the diameter of which corresponds to that of the cone bases.

9. Device according to claim 8, characterised in that the perforated plate (16, 17) has a thickness corresponding to the height of the cylindrical base portions (8) of the conical moulding elements (4, 5).

10. Device according to one of claims 2 to 9, characterised in that the mould accommodating the moulding plates (1, 2) comprises a pressure plate (11) and a support plate (9) with a frame (10), and that the combined height of the two moulding plates (1, 2) and a moulding element (4, 5) is between 2/3 and 3/4 of the height of the frame (10).

11. Device according to claim 10, characterised in that the frame is constructed as an angle frame (10), and that the rim (12) of the pressure plate (11) surrounds the angle frame (10), and that the combined height of the two moulding plates (1, 2) and a moulding element (4, 5) is between 2/3 and 3/4 of the height of the frame (10).

## Revendications

1. Procédé pour la fabrication de panneaux légers de construction avec utilisation de billes de verre boursouflé, d'argile expansée, de granulé ponceux, de mica ou d'un matériau analogue et d'un liant à l'état de mousse organique ou inogarnique, tel qu'une résine époxy ou une résine phénol-PU, lequel est mélangé avec les billes, mousse et durcit entre deux plaques de moulage (1,2) placées à distance l'une de l'autre et formant une matrice, caractérisé en ce que, dans le mélange se trouvant entre les deux plaques de moulage (1,2), est formée lors de son compactage et de son durcissement une pluralité de creux répartis de manière homogène, ouverts vers l'une au moins des deux faces extérieures des panneaux légers de construction.

2. Dispositif pour le déroulement du procédé selon la revendication 1, dans lequel sont prévues deux plaques de moulage (1,2), qui, refermées l'une sur l'autre, sont transportables dans une presse en vue du compactage du mélange qui s'y trouve, caractérisé en ce que la surface de l'une au moins des deux plaques de moulage (1,2) est garnie d'une pluralité de corps de moulage (4,5) répartis de manière homogène et dont la section, parallélement à la surface des plaques de moulage, décroît respectivement en direction de l'autre plaque de moulage.

3. Dispositif selon la revendication 2, caractérisé en ce que les deux plaques de moulage (1,2) sont garnies de corps de moulage (4,5).

4. Dispositif selon la revendication 2 ou 3, caractérisé en ce que les corps de moulage (4,5) sont de forme conique.

5. Dispositif selon la revendication 3, caractérisé en ce que les corps de moulage (4) de l'une des plaques de moulage (1) sont disposés de manière décalée relativement à ceux (5) de l'autre plaque de moulage (2) et en ce qu'à l'état assemblé des plaques de moulage (1,2), les corps de moulage (4) de l'une des plaques (1) font respectivement saillie dans les intervalles existant entre les corps de moulage (5) de l'autre plaque (2).

6. Dispositif selon les revendications 3 à 5, caractérisé en ce que les bases des corps de moulage (4 ou 5) de forme conique de l'une des plaques de moulage (1 ou 2) chevauchent dans leur projection sur l'autre plaque de moulage (2 ou 1) les bases des corps de moulage (5 ou 4) situés sur l'autre plaque de moulage (2 ou 1).

7. Dispositif selon l'une des revendications 2 à 6, caractérisé en ce que chaque corps de moulage (4,5) comporte, côté base, un trou borgne fileté (6) pour recevoir une vis de fixation (7) traversant la plaque de moulage (1,2) associée.

8. Dispositif selon l'une des revendications 2 à 7, caractérisé en ce qu'à chaque corps de moulage (4,5) de forme conique est conformé un pied cylindrique (8), dont le diamètre correspond à celui de la base du cône et en ce qu'à chaque plaque de moulage (1,2) est ajoutée une plaque perforée (16,17), comportant des trous (18), dont le diamètre correspond à celui de la base du cône.

9. Dispositif selon la revendication 8, caractérisé en ce que la plaque perforée (16,17) possède une épaisseur correspondant à la hauteur des pieds cylindriques (8) des corps de moulage (4,5) de forme conique.

10. Dispositif selon l'une des revendications 2 à 9, caractérisé en ce que la forme recevant les plaques de moulage (1,2) comporte une plaque support (9) pourvue d'un cadre (10) et une plaque de recouvrement (11) et en ce que la hauteur totale des deux plaques de moulage (1,2) et d'un corps de moulage (4,5) se situe entre les 2/3 et les 3/4 de la hauteur du cadre (10).

11. Dispositif selon la revendication 10, caractérisé en ce que le cadre est un cadre en équerre (10) et en ce que, par son bord d'appui (12), la plaque de recouvrement (11) entoure le cadre en équerre (10) et en ce que la hauteur totale des deux plaques de moulage (1,2) et d'un corps de moulage (4,5) se situe entre les 2/3 et les 3/4 de la hauteur du cadre (10).
